# EUROPEAN PATENT APPLICATION

(11) **EP 4 528 594 A1**
(43) Date of publication of application: **26.03.2025**
(21) Application number: 23198537.5
(22) Date of filing: 20.09.2023
(51) Int. Cl.: G06N 3/08, G06N 5/022, G06N 5/04

(54) **ONTOLOGY-BASED EVALUATION OF DATA IN INDUSTRIAL PLANTS**

(71) Applicant: ABB SCHWEIZ AG, 5400 Baden (CH)
(72) Inventor: SCHOCH, Nicolai, 69120 Heidelberg (DE); HOERNICKE, Mario, 76829 Landau (DE)
(74) Representative: Maiwald GmbH

(57) **Abstract**

A computer-implemented method (100) for evaluating at least one record (2a, 2b) of data, and in particular measurement and/or plant specification data, that characterize at least one component of an industrial plant (1), and/or an operational state thereof, the method comprising the steps of:
• transforming (110), by a trained encoder (3a, 3b), the at least one record (2a, 2b) of data into a representation (4a, 4b) in an embedding space (5);
• comparing (120) this representation (4a, 4b) to representations (7) of semantic entities (6) from a semantic information model (8) in the same embedding space (5), wherein each semantic entity (6) carries a semantic meaning (6*) with respect to the structure, the construction, and/or the functioning, of the industrial plant (1), and the semantic information model (8) comprises relationships between the semantic entities (6); and
• evaluating (130), from the result (120a) of the comparison, the semantic meaning (2a*, 2b*) of the record (2a, 2b) of data with respect to the structure, the construction, and/or the functioning, of the industrial plant (1).

## Description

### FIELD OF THE INVENTION

The invention relates to the evaluation of data, and in particular measurement and/or plant specification data, in industrial plants. Such evaluation is important both in the engineering stage and during normal operation of the plant.

### BACKGROUND

Both in the engineering stage (process and automation, P&A, engineering) and during normal operation of an industrial plant, a large amount of data in all sorts of modalities accrues. For example, I/O ports of pieces of equipment and their connections may be listed in I/O lists. Pieces of equipment and their interconnections may be shown in a process and instrumentation, P&ID, diagram. Control narratives and other documentation may comprise details about the functioning of individual entities, such as controllers. This may be augmented, for example, by images and videos taken in the industrial plant. When the plant is operational, a process control system may record a plethora of measurement data, and the behavior of the plant may also be monitored by video recordings, audio recordings, and the like.

Both the engineering and the monitoring of the operation of the plant presently involve much manual activity. The reason is that all the information is not available in a machine-understandable form that allows to put it all together. Rather, the streams of information are independent, come in a plethora of different forms and formats, and are unrelated.

### OBJECTIVE OF THE INVENTION

It is therefore an objective of the present invention to facilitate the automatic evaluation of records of data that characterize at least one component of an industrial plant, and/or an operational state thereof.

This objective is achieved by a computer-implemented method for evaluating at least one record of data according to a first independent claim, and by a computer-implemented method for training an encoder according to a second independent claim. Further advantageous embodiments are detailed in the respective dependent claims.

### DISCLOSURE OF THE INVENTION

The invention provides a computer-implemented method for evaluating at least one record of data, and in particular measurement and/or plant specification data, that characterize at least one component of an industrial plant, and/or an operational state thereof. The data can be of one or more suitable modalities of any kind. A nonexhaustive list of examples of data modalities that accrue during engineering, and/or during normal operation, of an industrial plant includes:
- an image that assigns values of at least one measurement quantity (e.g., a physical quantity, or also symbols or text) to pixels in a regular grid;
- a point cloud that assigns values of at least one measurement quantity to unconnected points in space;
- a time series of values of at least one measurement quantity, in particular an audio signal;
- a textual narrative, in particular a control narrative of the industrial plant;
- a list of input/output relationships of the industrial plant; and
- a process and instrumentation diagram or other composition plan of the industrial plant.

In particular, a record of data may comprise one or more values that are to be seen together when evaluating the data. For example, in a time series of measurement values, each value may be regarded as one record of data, but it is also possible to view an arbitrary section of the time series, or even the complete time series, as one record of data. In another example, all pixel values of an image belong to one and the same record of data.

In the course of the method, a trained encoder transforms the at least one record of data into a representation in an embedding space. In this embedding space, irrespective of the nature of the original data, the representation is a fixed arrangement of numeric values that always has the same number of values, e.g., an embedding vector or tensor. That is, the embedding space may be used to unite measurement data of different modalities.

The representation of the record of data is compared to representations of semantic entities from a semantic information model in the same embedding space. In particular, the semantic information model may comprise concepts, relations, rules and other domain knowledge with respect to the composition and/or operation of the industrial plant. The semantic information model can be viewed as a graph of semantic entities of the industrial plant that serves as a formal means of domain knowledge representation. Each such semantic entity carries a semantic meaning with respect to the structure, the construction, and/or the functioning, of the industrial plant. The semantic information model comprises relationships between the semantic entities. The "domain" may comprise the industrial plant itself, as well as its engineering and its operations. One example of a semantic information model is an ontology.

For example, the semantic information model may comprise a hierarchy of types of equipment, and/or instances of pieces of equipment, and/or designations used for such instances in the plant. For example, the semantic information model may comprise abstract type classes such as "tank", "reactor" or "valve" that fan out to sub-types of the respective classes, such as "storage tank", "mixing tank", "stirring reactor", "2-way valve" or "3-way valve". Instances of each class may be linked to their respective class. Designations of instances may be linked to their instances.

The representations of the semantic meanings are placed in the embedding space such that, when comparing two or more representations according to a given metric or criterion, the result of this comparison corresponds to the similarity and/or relationship between the respective entities according to the semantic information model. For example, different types of tanks, different types of reactors and different types valves may each be relatively close together in embedding space in a "tanks", "reactors" and "valves" cluster. But these clusters may be far apart from one another in embedding space. In particular, the comparison may be performed using a metric that has a suitable semantic notion, such as cosine similarity.

From the result of the comparison between the representation of the record of data on the one hand, and the representations of semantic entities on the other hand, the semantic meaning of the record of data with respect to the structure, the construction, and/or the functioning, of the industrial plant is evaluated.

It was found that, if data records of multiple modalities are transformed into one and the same embedding space, there is already a tendency that semantically similar items will be placed close together in embedding space. However, there is little control over, and insight into, what exactly will be regarded as similar; this can be neither inspected nor deliberately set. Rather, this behavior is essentially "black box".

In a toy example, consider a mapping of attributes of people to representations in the embedding space. Here, there are many possibilities according to which the people may be grouped. For example, there may be clusters of male, female and diverse persons. People may be considered similar depending on their job title, their physique or their passions. But the total set of attributes of a person forms a multi-dimensional vector, and if just this vector is transformed into embedding space, there is little to no control over what will be regarded as similar. In particular, it is difficult to enforce that one particular attribute shall be predominant.

By introducing a semantic information model and mapping the entities of this semantic information model into the same embedding space, representations with a defined semantic meaning are formed in the embedding space. If two representations of persons are close together in embedding space, this does not immediately give away on which attribute this is based. However, if two representations of persons are not only close to one another, but also close to a representation of "ham radio operator", "Bitcoin user" or "traffic rowdy", then it may be inferred that the people likely belong to the respective group corresponding to the representation. In particular, this is likely if, when transforming many data records of people into representations, clusters form in embedding space around said representations coming from the semantic information model.

The transforming into embedding space need not be performed in one go starting from the record of data. Rather, the result of any conventional processing of the record of data, such as the output of a one-shot object recognition from an image, may be transformed onwards to the representation of the record of data as well. Furthermore, the representation of the available ontological entities into the embedding space can be obtained once in the beginning, and then be used (as reference) for processing and performing comparisons on all incoming further data.

In a particularly advantageous embodiment, comparing representations of records of data with representations of semantic entities (or even representations of other records of data) comprises computing the value of a given metric that maps a tuple of two or more representations to a scalar. Prime examples of this include a distance metric, such as a cosine similarity metric, between two representations in multi-dimensional embedding space, and a direction in which one representation lies with respect to another representation. For example, such a direction may be defined as one or more angles relative to a given reference direction.

In this case, most preferably, for the transforming of the records of data into embedding space, an encoder is chosen that has been trained such that the metric of a tuple of two or more representations is dependent on the similarity of the respective records of data. For example, as discussed above, the encoder may have been trained such that distances between representations in embedding space correspond to similarity scores according to a given similarity metric.

In a further particularly advantageous embodiment, at least two records of data that are of different modalities are transformed into corresponding representations in the embedding space. These representations are compared. The result of this comparison is also considered when evaluating the semantic meaning of one or more of the records of data.

In particular, in this manner, different modalities may help each other out in case the semantic meaning of a record of data is hard to make out. For example, if an image of a piece of equipment is of poor quality, there may be an ambiguity as to whether the equipment is of type A or of type B. But when taking information from other modalities into account, it may, e.g., be inferred that this further information rules out type A. It is then established that the equipment is of type B.

In an industrial plant, for example, after equipment symbols have been recognized in the P&ID diagram, it may be inferred from the textual control narrative how a particular valve is connected to a particular reactor, namely via tube XYZ and using controller ABC. Using the associated I/O list, the tank from which the tube XYZ emanates may then be identified as tank K50 in the plant layout.

Thus, the different modalities may be processed into a machine-readable and machine-understandable connection between the different modalities. In particular, ambiguities that any single modality may have may be clarified using other modalities, and the different modalities may mutually improve each other. Moreover, by quantifying how well the representations produced from different modalities are in agreement with each other and with a particular representation of a semantic entity, the (un)certainty or confidence of a semantic meaning derived from one modality may be quantified by means of automated consideration of another modality. Due to the mutual improvement thanks to having multiple modalities, the uncertainty may be decreased, and the confidence may be increased.

The transformation into embedding space converts differences and relationships between the modalities, and between any one modality and the semantic information model, into metrical relationships, e.g., in the form of distances and/or angles, between the representations. In the common embedding space, the relationship between the newly inputted record of data on the one hand and the semantic entity from the semantic information model on the other hand.

In a further particularly advantageous embodiment, records of data of each modality are transformed using an encoder that is specific to this modality. In this manner, each encoder can specialize on how to process data of one particular modality, but the representations of all records of data will still be united in one single embedding space.

Even if the different encoders do not know about each other and about the presence of a semantic information model, records of data of different modalities relating to an entity that is present in the semantic information model as a semantic entity can still be expected to be transformed into representations in embedding space that are in agreement with one another, and also in agreement with the representation of the semantic entity from the semantic information model. This may, on the face of it, appear surprising. However, all modalities actually probe one and the same entity. Therefore, even an independent training of the different encoders should cause each encoder to capture the same basic concept of this one entity and encode this into the representation in embedding space. The same applies to relationships between entities: they should be the same for all modalities and converge to the one relationship indicated in the semantic information model.

Different encoders may still have some of the processing in common. For example, text, such as a control narrative, may be processed into a representation by a large language model, LLM. At the same time, an image may be processed, by a (Siamese) image recognition or classification neural network into a textual description (such as "tank"), which may then in turn be fed into the same LLM. The end result is then that both the image and the control narrative are transformed into representations in one common embedding space, namely that of the LLM. So the encoder used on the control narrative is just the LLM, whereas the encoder used on the image is a combination of the image recognition neural network and the LLM.

The representations of all semantic entities, and of all consistently possible combinations of semantic entities (e.g., concept - relation - concept, and chains of multiple such triples) from the ontology or other semantic information model define, in embedding space, what is known according to the semantic information model.

For example, the semantic information model may comprise the concepts
- tank,
- valve,
- reactor,
- capacity,
- threshold, etc.
and the concept-to-concept relations
- hasConnectionTo,
- haslnput,
- hasOutput,
- hasParameter, etc.

Then possible triple combinations include:
- tank hasConnectionTo reactor,
- tank haslnput valve,
- tank hasParameter threshold, etc.

In particular, these triples may be represented in the embedding space in the same way as the single concepts (tank, valve, reactor, etc.), e.g., by means of an LLM which takes the triples as "sentences" input.

The semantic information model in turn nominally describes all entities that are present in the industrial plant. Therefore, each representation of a record of data should be associated to at least one representation of a semantic entity. If a representation of a record of data is not associated with any representation of a semantic entity, this indicates that what has given rise to this record of data does not fit into the semantic information model. But the semantic information model needs to be in agreement with records of data that represent what is planned to realize the industrial plant, or what actually happens in the industrial plant. Disagreement indicates that either something is about to happen (or actually happens already) that is not planned for in the semantic information model and is therefore wrong, or the semantic information model is not upto-date. In the latter case, the engineering of the industrial plant may be correct, and the industrial plant may function correctly, but there is no proper inventory of what is, and what happens, in the industrial plant.

One possible cause of disagreement between representations of records of data on the one hand, and representations of semantic entities on the other hand, is that an entity that has given rise to the record of data does not belong in the industrial plant. For example, many pieces of equipment, such as valves or controllers, are available in many different types. According to the semantic information model, it may be intended to use one particular type in the industrial plant. A human error may cause a piece of equipment of the wrong type to find its way into the design of the plant, or even into the actual physical plant. For example, on a maintenance tour that spans several plants that use different types of valves, a mix-up may occur.

Another possible cause of disagreement is that the record of data, and/or its processing into a representation in embedding space, is not good enough to be conclusive for the determination to which semantic entity the record of data relates. This may be cured by obtaining an improved record of data, and/or an improved representation of the record of data.

If it is not possible to resolve why a representation of a record of data is not in agreement with any representation of a semantic entity, the help of an operator or human expert may be enlisted to associate the representation of the record of data to a representation of the semantic entity. For example, a piece of equipment of a particular type may change its outer appearance because its manufacturer deems this to be beneficial to sales. The piece of equipment may function exactly like the previous version, but when a camera image of the new version is analyzed, this may not be mapped to a representation in embedding space that is fully in agreement with the representation of the corresponding semantic entity from the semantic information model. The operator or human expert may then provide the information that, despite the changed outer appearance, the piece of equipment still is of the same type and should be recognized as such.

Therefore, in a further particularly advantageous embodiment, one and the same representation of the record of data is compared to multiple representations of semantic entities. In response to determining, according to a given criterion, that this comparison either does or does not indicate association of the representation of the record of data to any one of the multiple representations of semantic entities, action is taken to provide such association. This action includes one or more of the following:
- obtaining an improved record of data that relates to the same aspect and/or entity of the industrial plant as the original record of data;
- obtaining an improved representation of the record of data;
- amending and/or augmenting the semantic information model; and
- prompting an operator or human expert to associate the representation of the record of data to a representation of a semantic entity.

In particular, obtaining an improved record of data may comprise:
- modifying the operating parameters of a measurement instrument and/or data processing device with which the record of data was acquired; and
- acquiring the improved record of data with the measurement instrument and/or data processing device operating according to the modified operating parameters.
In particular, a measurement instrument may be used during the operations phase of the lifecycle of the industrial plant. A data processing device may be used earlier in this lifecycle, namely in the engineering phase of the industrial plant. For example, the data processing device may produce the P&ID diagram or the control narrative of the industrial plant.

In a figurative example, if an object is not clearly identifiable when viewed under a microscope, the focus and illumination may be varied, and the object may be moved around, until an image results that clearly allows identification of the object.

Advantageously, obtaining an improved representation of the record of data may comprise:
- modifying parameters that characterize the behavior of the trained encoder; and
- obtaining the improved representation by feeding the record of data to the trained encoder operating according to the modified parameters.
For example, if the outer appearance of a piece of equipment has changed, an encoder configured to map images of equipment to representations in the embedding space may be trained further to still recognize the new version as the same piece of equipment and transform an image of it to the same representation in embedding space.

For example, the encoder may comprise an image recognition base model that is a pre-trained model (of which the weights are frozen), and only the weights of one last layer, or of the last n layers, are re-trained or fine-tuned, e.g., on a context-specific data set of P&ID symbols.

The image recognition model may build on standard methods used in Zero-Shot / One-Shot / Few-Shot Learning (e.g., based on Siamese Networks) for P&ID recognition and Symbol detection, and implement also state-of-the-art mechanisms for enhancement, such as symbol knowledge bases, or handling of and training with stretched/squeezed/rotated, zoomed in/out, noisy symbols.

Furthermore, for P&ID symbols, the model may be trained not only on the symbol itself, but also on the class and style.

Additionally, semantic information model-driven enhancements of these Few-Shot Learning techniques (such as engineering-domain-aware / context-aware symbol space restrictions, e.g., for specific P&A Engineering sub-domains) may also be used here already.

In a further particularly advantageous embodiment, the obtaining of an improved representation, the amending and/or augmenting the semantic information model, and/or the prompting of an operator or human expert, is performed multiple times for a given set of records of data with the goal of optimizing an overall agreement of representations of records of data with representations of semantic entities. A degree of overall agreement that is measured once the optimization has finished is a more objective measure of how well the planned or realized industrial plant corresponds to the given semantic information model.

In a further particularly advantageous embodiment, in response to determining that one and the same representation of the record of data may be associated to multiple representations of semantic entities, weighting these candidate associations according to a predetermined method, algorithm and/or ruleset. In this manner, in the form of the method, algorithm and/or ruleset, additional knowledge regarding the industrial plant may be put to use. For example, a ruleset may be something that is represented in the ontology or other semantic information model. A method may, for example, comprise a mathematical method for uncertainty quantification that is applicable more generally here and also in other domains.

In particular, such additional knowledge may be used to resolve ambiguities. For example, some symbols in a P&ID diagram may be clearly recognized as "what they actually stand for", whereas other symbols may be recognized as "could be X or could be Y". If the relationship in embedding space between the representation of the records of data on the one hand and representations of semantic entities on the other hand admits that the record of data may relate to multiple semantic entities, the rules may confirm that the record indeed relates to one of those semantic entities, or rule certain entities out. In particular, if the exploitation of multiple available modalities is not yet sufficient to resolve ambiguities, ranking of lists of entities (e.g., things or types) may be established according to their respective confidence (or uncertainty), and allow for uncertainty quantification and improvement/training, e.g., through requesting dedicated human expert feedback.

Additionally, the ontological representation may be linked to and hence use/feed a knowledge graph and/or graph database, which contains some historical information, e.g., on similar plant setups, so that probabilistic/statistical learning can be built upon the multi-modal setup.

For example, at least one rule in the ruleset may stipulate that:
- if two or more representations indicate the presence of one and the same entity in the industrial plant, it is more likely that this entity is actually present; and/or
- if a particular entity is present, this implies that the industrial plant as a whole is likely to be of a particular type; and/or
- the presences of two particular entities, and/or types of entities, in the industrial plant are mutually exclusive; and/or
- in an industrial plant of a particular type, the presence of particular entities, and/or types of entities, is likely or not likely, or even compulsory or forbidden; and/or
- in the vicinity of one particular entity and/or type of entity, the presence of another particular entity and/or type of entity is likely or not likely.

For example, the setup may incorporate/consider probabilities of symbols in the environmental context/surrounding of other symbols for recognition/classification of the to-be-determined symbols, such as:
- near to, or in front of, or behind a pressure sensor symbol, there is often/never a reactor symbol, etc.; or
- in a chemical plant, there is never an XYZ symbol; or
- if there is an ABC symbol recognized, this means that we are dealing with an oil-and-gas-platform.

Additionally, through incorporation of domain/expert knowledge (e.g., represented in a semantic information model), one could further reduce the set of actually possible/allowed symbols (and thus increase the chance of recognizing the right symbol out of a set of fewer symbols), such as:
- if, after 100%-certain (or highly-likely) recognition of a XYZ-tank symbol, the set of possible other symbols in the respective P&ID diagram can be limited/restricted (based on the ontologically represented expert knowledge, that says, that there are no ABC-valves in a plant that has an XYZ-tank included); or
- if there is an abc symbol recognized, this means that we are dealing with an oil-and-gas-platform, because, the ontological concept of the abc symbol tells that this symbol only exists in oil-and-gas contexts. - This in turn may rule out other symbols or features.

Even P&ID-based symbol-to-symbol connectivity may be recognized and digitalized based on the joint multimodal+ontological embedding. For example, when finding an ambiguous line from symbol A to X or Y, then checking out symbol A in the joint multimodal+ontological embedding will yield the known concept A, and when then in turn checking what ontological relations there are from concept A to other concepts, then it becomes clear also what other concepts and hence symbols may at all be linked to symbol A and how. This may resolve the ambiguity in that, for example, X is possible, but Y cannot be.

Furthermore, also other modalities and their found relations may help with the connectivity. For example, finding an ambiguous line in the P&ID, from symbol A to M or N, and knowing from the multimodal+ontological embedding, that an associated control narrative talks about a component M, but N is not mentioned anywhere, then it becomes more likely that M represents the other symbol and hence connectivity.

Of course, confidence levels/indicators or uncertainty measures may be shown / presented to the user of the system as a result of the processed information, too. This may also include the reasoning for these measures/indicators, e.g., "a match between..." or "able to rule out something because... "or "strange things inconsistent because..." etc.

It is improbable that 100% accurate recognition of all symbols in P&ID diagrams or of all elements in control narratives, or other modalities, may be achieved. But even 80% should be a beneficial/valuable achievement for the user. The other 20% can be labeled "uncertain"/"unknown", so that a human engineer is pointed to them, so he/she can (with only low time efforts) further complete the machine-recognized 80% towards all full 100%. That is, every single association between records of data on the one hand and semantic entities from the semantic information model on the other hand that is found out according to the method proposed here is an improvement. The improvement is not an "on-off" effect that only sets in once the whole industrial plant can be automatically explained by machine.

In particular, the semantic meaning of the record of data with respect to the structure, the construction, and/or the functioning, of the industrial plant may specifically comprise:
- an indication to which type of equipment, and/or to which concrete piece of equipment, in the industrial plant the record of data relates; and/or
- an indication how a piece of equipment in the industrial plant is related and/or connected to at least one other piece of equipment; and/or
- an indication of the operating state of at least one piece of equipment in the industrial plant, and/or of the industrial plant as a whole.
These pieces of information that belong to the most frequently sought ones when engineering and/or operating an industrial plant.

In particular, in a further particularly advantageous embodiment, based at least in part on the semantic meaning of the record of data with respect to the structure, the construction, and/or the functioning, of the industrial plant, an amendment for the layout, topology, setup or specification of the industrial plant, and/or for the mode of operation of the industrial plant may be determined. The goal of this amendment may be to improve the structure, the construction, and/or the functioning, of the industrial plant. The improvement is brought about by virtue of changing the layout, topology, setup or specification of the industrial plant, and/or the mode of operation of the industrial plant, according to the respective amendment.

In a further particularly advantageous embodiment, the determining of an amendment comprises:
- determining, based at least in part on the semantic meaning of the record of data with respect to the structure, the construction, and/or the functioning, of the industrial plant, the value of at least one given performance indicator for the industrial plant; and
- determining an amendment that, when applied to the layout, topology, setup or specification of the industrial plant, and/or to the mode of operation of the industrial plant, is likely to improve the value of the performance indicator.
In this manner, the engineering, and/or the operation, of the industrial plant may be tailored to any objective that may be captured by a performance indicator.

Examples of the performance indicator that are particularly relevant for the engineering of the industrial plant include
- a feasibility of physically realizing the industrial plant; and/or
- contradictions in the layout, topology, setup or specification of the industrial plant; and/or
- a re-use of energy in the industrial plant.

For example, re-use of energy may happen by heat exchange. For example, if a reactor requires heat energy, then it may be located close to some other plant component that has and emits "waste heat".

In particular, in a mostly manual engineering process based on disparate sources of information, it is easy to overlook that making a change, based on one such source of information may cause a constraint that is evident from another source of information to be missed, because mostly one source of information is being predominantly viewed at any one time. For example, when switching to a new type of pump or valve for the sake of improving the throughput of the plant, it may be overlooked that the new pump or valve has slightly larger dimensions than the old one and will not fit into the available physical space that is available in the plant. With the presently proposed method, errors that might preclude the physical realization may be discovered automatically.

The same applies for contradictions in the layout, topology, setup or specification of the industrial plant. In particular, a contradiction may arise if, for one and the same property of the industrial plant, a piece of equipment within it, and/or a mode of operation, two requirements arise that are mutually exclusive. For example, for one and the same pipe diameter, there may be a first requirement "at least 10 cm" and a second requirement "at most 8 cm".

As discussed above, the main improvements compared with previous multimodal data evaluation methods are brought about by virtue of the representations of entities from the semantic information model. On top of all the other modalities, these representations introduce a new modality that is entirely transparent and controllable. In this manner, as explained above, what happens in the embedding space no longer happens in a "black box". One way of creating these representations of semantic entities in the embedding space is by feeding these semantic entities to a special trained encoder.

The invention therefore also provides a computer-implemented method for training an encoder to create representations of semantic entities of an industrial plant in an embedding space.

In the course of this training method, at least one semantic information model of the industrial plant is provided. As discussed before, in particular, the semantic information model may be an ontology. In this semantic information model, each semantic entity carries a semantic meaning with respect to the structure, the construction, and/or the functioning, of the industrial plant, and the semantic information model comprises relationships between the semantic entities.

By means of the to-be-trained encoder, records corresponding to entities of the semantic information model are transformed into representations in the embedding space. The records can be of any form. The only requirement is that the similarity of the records in whatever space in which they are initially created is commensurate with the similarity and/or relationship of the respective semantic entities in the context of the industrial plant.

Representations generated by the to-be-trained encoder are compared. It is rated by a predetermined loss function how well the result of this comparison with respect to any given selected metric corresponds to a similarity and/or relationship between the respective entities according to the semantic information model. Parameters that characterize the behavior of the encoder are optimized towards the goal of improving the rating by the loss function.

By means of this contrastive learning, the encoder is empowered to create the representations with known semantic meanings and relationship in embedding space.

The training may use one or several ontologies. It is then good not only for these ontologies, but may also generalize to unseen ontologies. In particular, if the semantic information model is amended with the intention of making improvements to the industrial plant, then the encoder may still be used in order to create new representations of the semantic entities in embedding space.

Because they are computer-implemented, the present methods may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for evaluating at least one record of data;
Figure 2: Illustration of the analysis of multi-modal data 2a, 2b with the aid of representations 7 of semantic entities 6 of a semantic information model 8;
Figure 3: Exemplary embodiment of the method 200 for training an encoder 11 for creating representations 7 in the common embedding space 5.

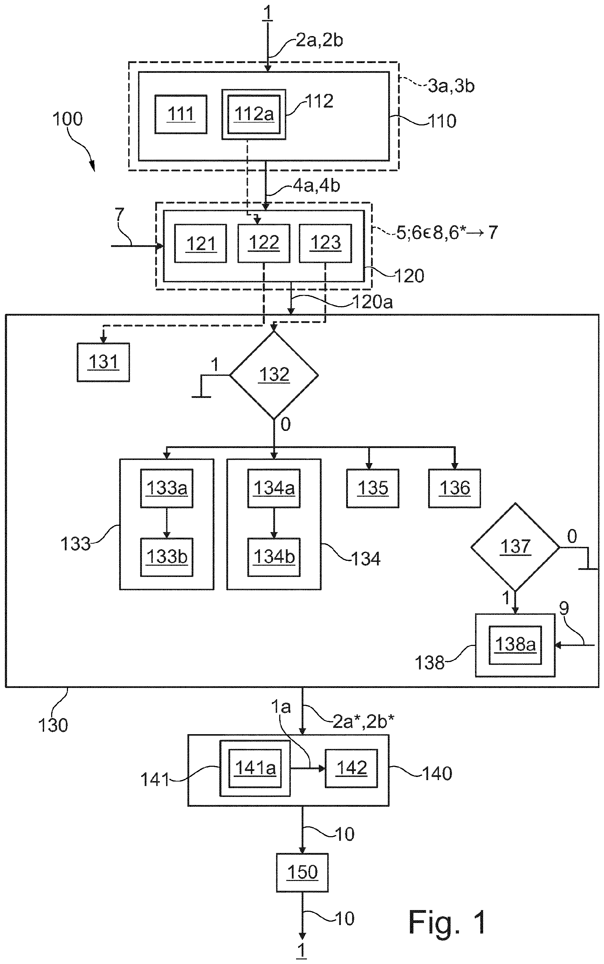

Figure 1 is a schematic flow chart of an embodiment of the method 100 for evaluating at least one record 2a, 2b of data, and in particular measurement data. The one or more records 2a, 2b of data characterize at least one component of an industrial plant 1, and/or an operational state thereof.

In step 110, a trained encoder 3a, 3b transforms the at least one record 2a, 2b of data into a representation 4a, 4b in an embedding space 5.

According to block 111, an encoder 3a, 3b may be chosen that has been trained such that the metric of a tuple of two or more representations 4a, 4b is dependent on the similarity of the respective records 2a, 2b of data.

According to block 112, at least two records 2a, 2b of data that are of different modalities may be transformed into corresponding representations 4a, 4b in the embedding space 5.

According to block 112a, records 2a, 2b of data of each modality may be transformed using an encoder 3a, 3b that is specific to this modality.

In step 120, the one or more representations 4a, 4b are compared to representations 7 of semantic entities 6 from a semantic information model 8 in the same embedding space 5 in which the representations 4a, 4b are. Each semantic entity 6 carries a semantic meaning 6* with respect to the structure, the construction, and/or the functioning, of the industrial plant 1. The semantic information model 8 also comprises relationships between the semantic entities 6.

According to block 121, the comparing may comprise computing the value of a given metric that maps a tuple of two or more representations 4a, 4b, 7 to a scalar.

According to block 122, representations 4a, 4b of multiple modalities may be compared to one another as well.

Alternatively or in combination to this, according to block 123, one and the same representation 4a, 4b of the record 2a, 2b of data may be compared to multiple representations 7 of semantic entities 6.

In step 130, from the result 120a of the comparison performed in step 120, the sought semantic meaning 2a*, 2b* of the record 2a, 2b of data with respect to the structure, the construction, and/or the functioning, of the industrial plant 1 is evaluated.

According to block 131, if representations of multiple modalities have been compared according to block 122, the result of this comparison may also be considered when evaluating the semantic meaning 2a*, 2b* of one or more of the records 2a, 2b of data.

According to block 132, if one or more representations 4a, 4b of records 2a, 2b have been compared to multiple representations 7 of semantic entities 6, it may be checked whether this comparison indicates association of the representation 4a, 4b of the record 2a, 2b of data to any one of the multiple representations 7 of semantic entities 6. If this is not the case (truth value 0), different remedies may be attempted, alone or in combination:
- According to block 133, an improved record 2a, 2b of data that relates to the same aspect and/or entity of the industrial plant 1 as the original record 2a, 2b of data may be obtained. This in turn may comprise:
   ∘ modifying, according to block 133a, the operating parameters of a measurement instrument with which the record 2a, 2b of data was acquired; and
   ∘ acquiring, according to block 133b, the improved record 2a, 2b of data with the measurement instrument operating according to the modified operating parameters.
- According to block 134, an improved representation 4a, 4b of the record 2a, 2b of data may be obtained. This in turn may comprise:
   ∘ modifying, according to block 134a, parameters that characterize the behavior of the trained encoder 3a, 3b; and
   ∘ obtaining, according to block 134b, the improved representation 4a, 4b by feeding the record 2a, 2b of data to the trained encoder 3a, 3b operating according to the modified parameters.
- According to block 135, the semantic information model 8 may be amended and/or augmented.
- According to block 136, an operator or human expert may be prompted to associate the representation 4a, 4b of the record 2a, 2b of data to a representation 7 of a semantic entity 6.

According to block 137, it may be checked whether one and the same representation 4a, 4b of the record 2a, 2b of data may be associated to multiple representations 7 of semantic entities 6, judging from the closeness of the representation 4a, 4b to the representations 7 of semantic entities 6 or any other suitable metric of association or relatedness. If this is the case (truth value 1), to resolve the ambiguity, according to block 138, these candidate associations may be weighted according to a predetermined method, algorithm and/or ruleset 9. This ruleset 9 may, according to block 138a, stipulate that:
- if two or more representations 4a, 4b indicate the presence of one and the same entity in the industrial plant 1, it is more likely that this entity is actually present; and/or
- if a particular entity is present, this implies that the industrial plant 1 as a whole is likely to be of a particular type; and/or
- the presences of two particular entities, and/or types of entities, in the industrial plant 1 are mutually exclusive; and/or
- in an industrial plant 1 of a particular type, the presence of particular entities, and/or types of entities, is likely or not likely, or even compulsory or prohibited; and/or
- in the vicinity of one particular entity and/or type of entity, the presence of another particular entity and/or type of entity is likely or not likely.

In the example shown in Figure 1, in step 140, the semantic meaning 2a*, 2b* of the record 2a, 2b of data with respect to the structure the construction, and/or the functioning, of the industrial plant 1, that has been determined as described above is exploited further. Based at least in part on this semantic meaning 2a*, 2b*, an amendment 10 for the layout, topology, setup or specification of the industrial plant 1, and/or for the mode of operation of the industrial plant 1 is determined. In particular, the goal of this amendment 10 may be to improve the industrial plant 1, and/or its mode of operation, with respect to any given criterion. In step 150, the layout, topology, setup or specification of the industrial plant 1, and/or the mode of operation of the industrial plant 1, is changed according to the respective amendment 10.

According to block 141, based at least in part on the semantic meaning 2a*, 2b* of the record 2a, 2b of data with respect to the structure, the construction, and/or the functioning, of the industrial plant 1, the value of at least one given performance indicator 1a for the industrial plant 1 may be determined. According to block 142, an amendment 10 that, when applied to the layout, topology, setup or specification of the industrial plant 1, and/or to the mode of operation of the industrial plant 1, is likely to improve the value of the performance indicator 1a may then be determined.

According to block 141a, the performance indicator 1a may comprise one or more of:
- a feasibility of physically realizing the industrial plant 1; and/or
- contradictions in the layout, topology, setup or specification of the industrial plant 1; and/or
- a re-use of energy in the industrial plant 1.

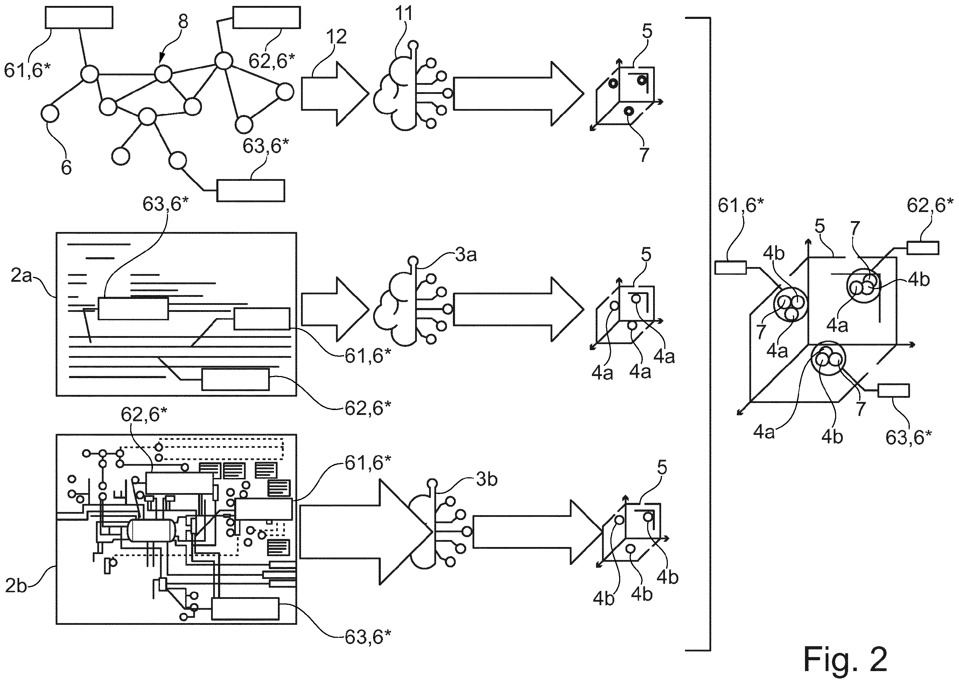

Figure 2 illustrates the multi-modal creation of representations 4a, 4b in an embedding space 5 and the use of representations 7 of semantic entities 6 from an semantic information model 8 in the same embedding space 5.

In the example shown in Figure 2, the semantic entities 6 have semantic meanings 6*. Three such semantic meanings 6* are exemplarily shown, namely tank 61, reactor 62 and valve 63. Records 12 corresponding to entities 6 of the semantic information model 8 are mapped, by a trained encoder 11, to the representations 7 in the embedding space 5 to serve as "anchor points" with defined semantic meanings 6*.

Records 2a of data of the first modality comprise textual information, here: a control narrative. They are transformed, by a first encoder 3a, to representations 4a in the embedding space 5. Here, one and the same record 2a, here: one control narrative, mentions all of the tank 61, the reactor 62, and the valve 63, so three representations 4a in the embedding space 5 are generated.

Records 2b of data of the second modality comprise images, here: a process and instrumentation, P&ID, diagram. They are transformed, by a second encoder 3b, to representations 4b in the embedding space 5. Here, the record 2b contains a full P&ID diagram with all of the tank 61, the reactor 62, and the valve 63, so three representations 4b in the embedding space 5 are generated.

As it is shown on the right-hand side of Figure 2, the end result is that the embedding space 5 comprises
- representations 7 of the semantic entities 6;
- representations 4a of text records 2a that, by virtue of being close to representations 7 annotated with the semantic meanings 6* of tank 61, reactor 62 or valve 63, can be attributed the respective semantic meaning 6*; and
- representations 4a of image records 2b that, by virtue of being close to representations 7 annotated with the semantic meanings 6* of tank 61, reactor 62 or valve 63, can be attributed the respective semantic meaning 6*;

Consequently, the respective text records 2a and image records 2b can be attributed the so-determined semantic meanings 6* as their semantic meaning 2a*, 2b*.

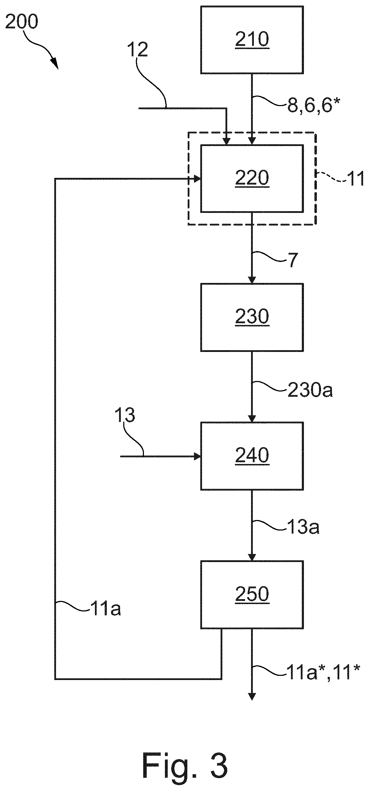

Figure 3 is a schematic flow chart of an embodiment of the method 200 for training an encoder 11 to create representations 7 of semantic entities 6 of an industrial plant 1 in an embedding space 5.

In step 210, at least one semantic information model 8 of the industrial plant 1 is provided. In this semantic information model 8, each semantic entity 6 carries a semantic meaning 6* with respect to the structure, the construction, and/or the functioning, of the industrial plant 1. Furthermore, the semantic information model 8 comprises relationships between the semantic entities 6.

In step 220, records 12 corresponding to entities 6 of the semantic information model 8 are transformed into representations 7 in the embedding space 5 by the to-be-trained encoder 11.

In step 230, the so-generated representations 7 are compared.

In step 240, by means of a predetermined loss function 13, it is rated how well the result 230a of this comparison corresponds to a similarity and/or relationship between the respective entities 6 according to the semantic information model 8. The rating is labelled with the reference sign 13a.

In step 250, parameters 11a that characterize the behavior of the encoder 11 towards the goal of improving the rating 13a by the loss function 13. This optimization may terminate once any suitable termination criterion is fulfilled, such as a convergence, a test accuracy, or a number of iterations. The finally optimized state of the parameters 11a is labelled with the reference sign 11a*. This state also characterizes the finally trained state 11* of the encoder 11.

### List of reference signs:

- 1: industrial plant
- 1a: performance indicator of industrial plant 1a
- 2a, 2b: records of data
- 2a*, 2b*: semantic meanings of records 2a, 2b
- 3a, 3b: encoders for records 2a, 2b of data
- 4a, 4b: representations of records 2a, 2b in embedding space 5
- 5: embedding space
- 6: semantic entities from semantic information model 8
- 6*: semantic meanings of semantic entities 6
- 61: tank as semantic meaning 6*
- 62: reactor as semantic meaning 6*
- 63: valve as semantic meaning 6*
- 7: representations of semantic entities 6 in embedding space 5
- 8: semantic information model of entities 6 of plant 1 and their relationships
- 9: method, algorithm and/or ruleset for resolving ambiguities
- 10: amendment to industrial plant 1 and/or mode of operation
- 11: encoder for encoding records 12 into representations 7
- 11*: trained state of encoder 11
- 11a: parameters, characterize behavior of encoder 11
- 11a*: finally optimized state of parameters 11a
- 12: records corresponding to semantic entities 6
- 13: loss function
- 13a: rating outputted by loss function 13
- 100: method for evaluating records 2a, 2b
- 110: transforming records 2a, 2b into representations 4a, 4b
- 111: choosing encoder trained for matching metric to similarity
- 112: choosing records 2a, 2b from multiple modalities
- 112a: using modality-specific encoders 3a, 3b
- 120: comparing representations 4a, 4b to representations 7
- 121: computing value of scalar metric
- 122: comparing representations 4a, 4b to one another
- 123: comparing one representation 4a, 4b to representations 7
- 130: determining sought semantic meaning 2a*, 2b*
- 131: considering result of comparing representations 4a, 4b
- 132: checking for association to a representation 7
- 133: obtaining improved record 2a, 2b
- 133a: modifying parameters of measurement instrument/data processing device
- 133b: acquiring improved record 2a, 2b with modified parameters
- 134: obtaining improved representation 4a, 4b
- 134a: modifying parameters of encoder 3a, 3b
- 134b: obtaining representation 4a, 4b with modified parameters
- 135: amending and/or augmenting semantic information model 8
- 136: prompting operator or human expert
- 137: checking for association to multiple representations 7
- 138: weighting candidate associations according to method, algorithm, ruleset 9
- 138a: choosing ruleset 9 with particular rules
- 140: determining amendment 10
- 141: determining value of performance indicator 1a
- 141a: choosing specific performance indicator 1a
- 142: determining amendment 10
- 150: applying amendment 10 to industrial plant 1
- 200: method for training encoder 11
- 210: providing semantic information model 8
- 220: transforming records 12 into representations 7
- 230: comparing representations 7
- 230a: result of comparing 230
- 240: rating result 230a with loss function 13
- 250: optimizing parameters 11a

## Claims

1. A computer-implemented method (100) for evaluating at least one record (2a, 2b) of data, and in particular measurement and/or plant specification data, that characterize at least one component of an industrial plant (1), and/or an operational state thereof, the method comprising the steps of:
• transforming (110), by a trained encoder (3a, 3b), the at least one record (2a, 2b) of data into a representation (4a, 4b) in an embedding space (5);
• comparing (120) this representation (4a, 4b) to representations (7) of semantic entities (6) from a semantic information model (8) in the same embedding space (5), wherein each semantic entity (6) carries a semantic meaning (6*) with respect to the structure, the construction, and/or the functioning, of the industrial plant (1), and the semantic information model (8) comprises relationships between the semantic entities (6); and
• evaluating (130), from the result (120a) of the comparison, the semantic meaning (2a*, 2b*) of the record (2a, 2b) of data with respect to the structure, the construction, and/or the functioning, of the industrial plant (1).

2. The method (100) of claim 1, wherein the comparing comprises computing (121) the value of a given metric that maps a tuple of two or more representations (4a, 4b, 7) to a scalar.

3. The method (100) of claim 2, wherein an encoder (3a, 3b) is chosen (111) that has been trained such that the metric of a tuple of two or more representations (4a, 4b) is dependent on the similarity of the respective records (2a, 2b) of data.

4. The method (100) of any one of claims 1 to 3, wherein
• at least two records (2a, 2b) of data that are of different modalities are transformed (112) into corresponding representations (4a, 4b) in the embedding space (5);
• these representations are compared (122); and
• the result of this comparison is also considered (131) when evaluating the semantic meaning (2a*, 2b*) of one or more of the records (2a, 2b) of data.

5. The method (100) of claim 4, wherein records (2a, 2b) of data of each modality are transformed (112a) using an encoder (3a, 3b) that is specific to this modality.

6. The method (100) of any one of claims 1 to 5, further comprising:
• comparing (123) one and the same representation (4a, 4b) of the record (2a, 2b) of data to multiple representations (7) of semantic entities (6); and
• in response to determining (132), according to a given criterion, that this comparison either does or does not indicate association of the representation (4a, 4b) of the record (2a, 2b) of data to any one of the multiple representations (7) of semantic entities (6),
∘ obtaining (133) an improved record (2a, 2b) of data that relates to the same aspect and/or entity of the industrial plant (1) as the original record (2a, 2b) of data; and/or
∘ obtaining (134) an improved representation (4a, 4b) of the record (2a, 2b) of data; and/or
∘ amending and/or augmenting (135) the semantic information model (8); and/or
∘ prompting (136) an operator or human expert to associate the representation (4a, 4b) of the record (2a, 2b) of data to a representation (7) of a semantic entity (6).

7. The method (100) of claim 6, wherein obtaining an improved record (2a, 2b) of data comprises:
• modifying (133a) the operating parameters of a measurement instrument and/or data processing device with which the record (2a, 2b) of data was acquired; and
• acquiring (133b) the improved record (2a, 2b) of data with the measurement instrument and/or data processing device operating according to the modified operating parameters.

8. The method (100) of any one of claims 6 to 7, wherein obtaining (134) an improved representation (4a, 4b) of the record (2a, 2b) of data comprises:
• modifying (134a) parameters that characterize the behavior of the trained encoder (3a, 3b); and
• obtaining (134b) the improved representation (4a, 4b) by feeding the record (2a, 2b) of data to the trained encoder (3a, 3b) operating according to the modified parameters.

9. The method (100) of any one of claims 6 to 8, wherein the obtaining (133) of an improved record (2a, 2b) of data, the obtaining (134) of an improved representation (4a, 4b), the amending and/or augmenting (135) of the semantic information model (8), and/or the prompting (136) of an operator or human expert, is performed multiple times for a given set of records (2a, 2b) of data with the goal of optimizing an overall agreement of representations (4a, 4b) of records of data with representations (7) of semantic entities (6).

10. The method (100) of any one of claims 1 to 9, wherein, in response to determining (137) that one and the same representation (4a, 4b) of the record (2a, 2b) of data may be associated to multiple representations (7) of semantic entities (6), weighting (138) these candidate associations according to a predetermined method, algorithm and/or ruleset (9).

11. The method (100) of claim 10, wherein at least one rule in the predetermined ruleset (9) stipulates (138a) that:
• if two or more representations (4a, 4b) indicate the presence of one and the same entity in the industrial plant (1), it is more likely that this entity is actually present; and/or
• if a particular entity is present, this implies that the industrial plant (1) as a whole is likely to be of a particular type; and/or
• the presences of two particular entities, and/or types of entities, in the industrial plant (1) are mutually exclusive; and/or
• in an industrial plant (1) of a particular type, the presence of particular entities, and/or types of entities, is likely or not likely, or compulsory or forbidden; and/or
• in the vicinity of one particular entity and/or type of entity, the presence of another particular entity and/or type of entity is likely or not likely.

12. The method (100) of any one of claims 1 to 11, wherein the semantic meaning (2a*, 2b*) of the record (2a, 2b) of data with respect to the structure, the construction, and/or the functioning, of the industrial plant (1) specifically comprises:
• an indication to which type of equipment, and/or to which concrete piece of equipment, in the industrial plant (1) the record (2a, 2b) of data relates; and/or
• an indication how a piece of equipment in the industrial plant is related and/or connected to at least one other piece of equipment; and/or
• an indication of the operating state of at least one piece of equipment in the industrial plant (1), and/or of the industrial plant (1) as a whole.

13. The method (100) of any one of claims 1 to 12, further comprising:
• determining (140), based at least in part on the semantic meaning (2a*, 2b*) of the record (2a, 2b) of data with respect to the structure, the construction, and/or the functioning, of the industrial plant (1), an amendment (10) for the layout, topology, setup or specification of the industrial plant (1), and/or for the mode of operation of the industrial plant (1); and
• changing (150) the layout, topology, setup or specification of the industrial plant (1), and/or the mode of operation of the industrial plant (1), according to the respective amendment (10).

14. The method (100) of claim 13, wherein the determining of an amendment (10) comprises:
• determining (141), based at least in part on the semantic meaning (2a*, 2b*) of the record (2a, 2b) of data with respect to the structure, the construction, and/or the functioning, of the industrial plant (1), the value of at least one given performance indicator (1a) for the industrial plant (1); and
• determining (142) an amendment (10) that, when applied to the layout, topology, setup or specification of the industrial plant (1), and/or to the mode of operation of the industrial plant (1), is likely to improve the value of the performance indicator (1a).

15. The method (100) of claim 14, wherein the performance indicator (1a) comprises (141a) one or more of:
• a feasibility of physically realizing the industrial plant (1); and/or
• contradictions in the layout, topology, setup or specification of the industrial plant (1); and/or
• a re-use of energy in the industrial plant (1).

16. The method (100) of any one of claims 1 to 15, wherein the one or more records (2a, 2b) of data are of one or more of the following modalities:
• an image that assigns values of at least one measurement quantity to pixels in a regular grid;
• a point cloud that assigns values of at least one measurement quantity to unconnected points in space;
• a time series of values of at least one measurement quantity, in particular an audio signal;
• a textual narrative, in particular a control narrative of the industrial plant (1);
• a list of input/output relationships of the industrial plant (1); and
• a process and instrumentation diagram or other composition plan of the industrial plant (1).

17. A computer-implemented method (200) for training an encoder (11) to create representations (7) of semantic entities (6) of an industrial plant (1) in an embedding space (5), comprising the steps of:
• providing (210) at least one semantic information model (8) of the industrial plant (1), wherein, in this semantic information model (8), each semantic entity (6) carries a semantic meaning (6*) with respect to the structure, the construction, and/or the functioning, of the industrial plant (1), and the semantic information model (8) comprises relationships between the semantic entities (6);
• transforming (220), by the encoder (11), records (12) corresponding to entities (6) of the semantic information model (8) into representations (7) in the embedding space (5);
• comparing (230) so-generated representations (7);
• rating (240), by means of a predetermined loss function (13), how well the result (230a) of this comparison corresponds to a similarity and/or relationship between the respective entities (6) according to the semantic information model (8); and
• optimizing (250) parameters (11a) that characterize the behavior of the encoder (11) towards the goal of improving the rating (13a) by the loss function (13).

18. A computer program, comprising machine-readable instructions that, when executed by one or more computers and/or compute instances, cause the one or more computers and/or compute instances to perform a method (100, 200) of any one of claims 1 to 17.

19. A non-transitory machine-readable data carrier and/or a download product with the computer program of claim 18.

20. One or more computers and/or compute instances with the computer program of claim 18, and/or with the machine-readable data carrier and/or download product of claim 19.
